# EUROPEAN PATENT SPECIFICATION

(11) **EP 3 382 200 B1**
(45) Date of publication and mention of the grant of the patent: **30.12.2020**
(21) Application number: 17382156.2
(22) Date of filing: 29.03.2017
(51) Int. Cl.: F03D 13/10

(54) **HUB CRANE ASSEMBLY FOR A WIND TURBINE**
NABENKRANANORDNUNG FÜR EINE WINDTURBINE
ENSEMBLE GRUE À PLATE-FORME POUR UNE ÉOLIENNE

(43) Date of publication of application: 03.10.2018
(73) Proprietor: General Electric Company, Schenectady, NY 12345 (US)
(72) Inventor: GOMEZ, Daniel, 08005 ES Barcelona (ES); HOYT, Jacob Thomas, Cazenovia, NY New York 13035 (US); JOHNSON, Michael Royce, Schenectady, NY New York 12345 (US)
(74) Representative: de Rooij, Mathieu Julien

(56) References cited:
- JP-A- 2015 151 989

## Description

### FIELD OF THE INVENTION

The present disclosure relates generally to wind turbines, and more particularly to a hub crane assembly for a wind turbine.

### BACKGROUND OF THE INVENTION

Wind power is considered one of the cleanest, most environmentally friendly energy sources presently available, and wind turbines have gained increased attention in this regard. A modern wind turbine typically includes a tower, a generator, a gearbox, a nacelle, and one or more rotor blades. The nacelle includes a rotor coupled to the gearbox and to the generator. The rotor and the gearbox are mounted on a bedplate support frame located within the nacelle. More specifically, in many wind turbines, the gearbox is mounted to the bedplate via one or more torque supports or arms. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

Oftentimes, it is desired to lift or lower various wind turbine components between the ground and the hub and/or nacelle mounted atop the tower. For example, certain components within the nacelle or hub requiring repair and/or maintenance may need to be lowered to the ground or may require repair parts to be lifted uptower. As such, large cranes are typically utilized to lift and lower wind turbine components between the ground or other support surface and the hub/nacelle. Large cranes, however, are expensive and may offer little control of the components being lifted or lowered. Thus, such components may run the risk of colliding with the tower as they are being lifted or lowered.

In view of the aforementioned, an adjustable hub crane assembly for a wind turbine that lifts and lowers various wind turbine components from the ground to an uptower location would be desired in the art. More specifically, a hub crane assembly having an adjustable working radius that allowed the crane to move wind turbine components forward and backwards, thereby changing the distance to the hub, would be advantageous

An example of a prior art hub crane assembly is known from JP 2015 151989 A.

### BRIEF DESCRIPTION OF THE INVENTION

Aspects and advantages of the invention will be set forth in part in the following description, or may be obvious from the description, or may be learned through practice of the invention.

In one aspect, the present disclosure is directed to a hub crane assembly for a wind turbine. The hub crane assembly includes an adjustable articulating arm mountable at a first height on a hub of the wind turbine at a hinge point, a first hoist mountable at a second height of the wind turbine, the second height being greater than the first height, and a support component secured to the first hoist and a first attachment point of the articulating arm. Further, the first hoist is configured to rotate the articulating arm about the hinge point via the support component such that, as the articulating arm rotates, a clearance distance between the wind turbine and the articulating arm changes.

In one embodiment, the hub crane assembly may include a second hoist secured to the articulating arm at an opposing, second attachment point. In such embodiments, the second hoist is configured to lift or lower a load from a support surface to the hub.

In another embodiment, the articulating arm may include a first arm portion and a second arm portion. More specifically, in certain embodiments, the first and second arm portions may be secured together at a fixed attachment location. For example, in particular embodiments, the fixed attachment location may include the second arm portion of the articulating arm secured within a slot defined in the first arm portion.

In further embodiments, the second arm portion of the articulating arm may be mounted to the hub via a mounting plate at the hinge point.

In additional embodiments, the hub crane assembly may include an anchoring point configured to secure the first hoist to the hub of the wind turbine. More particularly, the anchoring point may include a swivel bolt.

In specific embodiments, the articulating arm may be mountable to a front location of the hub, whereas the first hoist may be mountable to a top location of at least one of the hub or a nacelle of the wind turbine.

In another embodiment, the support component may include a strap, a sling, or similar.

In another aspect, the present disclosure is directed to a method for lifting or lowering a wind turbine component between a support surface and a hub of a wind turbine. The method includes securing an adjustable articulating arm at a first height on the hub of the wind turbine. Further, the method includes securing a first hoist at a second height of the wind turbine, the second height being greater than the first height. Moreover, the method includes connecting a support component to the first hoist and a first attachment point of the articulating arm. In addition, the method includes securing a second hoist to a second attachment point of the articulating arm and securing a load to the second hoist via at least one strap. As such, the method includes lifting or lowering, via coordinated hoist operation of the first and second hoists, the articulating arm and the load. Thus, as the load is lifted or lowered via the second hoist, the first hoist rotates the articulating arm about a hinge point such that a clearance distance between the load and the wind turbine changes.

In one embodiment, the method may further include securing the adjustable articulating arm at the first height on the hub via a mounting plate from within the hub. It should be understood that the method may further include any additional steps and/or features as described herein.

In yet another aspect, the present disclosure is directed to a wind turbine. The wind turbine includes a tower mounted to a support surface, a nacelle mounted atop the tower, a rotor mounted to the nacelle and having a rotatable hub with one or more rotor blades mounted thereto, and a hub crane assembly. The hub crane assembly includes an adjustable articulating arm mountable at a first height on a hub of the wind turbine at a hinge point, a first hoist mountable at a second height of the wind turbine, the second height being greater than the first height, and a support component secured to the first hoist and a first attachment point of the articulating arm. Further, the first hoist is configured to rotate the articulating arm about the hinge point via the support component such that, as the articulating arm rotates, a clearance distance between the wind turbine and the articulating arm changes. It should be understood that the wind turbine may further include any additional features as described herein.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of one embodiment of a wind turbine according to one embodiment of the present disclosure;
FIG. 2 illustrates a perspective view of a simplified, internal view of one embodiment of a nacelle of a wind turbine according to the present disclosure;
FIG. 3 illustrates a partial, perspective view of one embodiment of hub of a wind turbine, particularly illustrating a hub crane assembly according to the present disclosure mounted thereto;
FIG. 4 illustrates a perspective view of one embodiment of an adjustable articulating arm of a hub crane assembly according to the present disclosure;
FIG. 5 illustrates a partial, perspective view of one embodiment of hub of a wind turbine, particularly illustrating a hub crane assembly having an articulating arm in an initial position according to the present disclosure;
FIG. 6 illustrates a front view of one embodiment of hub of a wind turbine, particularly illustrating a hub crane assembly according to the present disclosure mounted thereto;
FIG. 7 illustrates a partial, perspective view of one embodiment of hub of a wind turbine, particularly illustrating a hub crane assembly having an articulating arm in a slightly rotated position according to the present disclosure;
FIG. 8 illustrates a partial, perspective view of one embodiment of hub of a wind turbine, particularly illustrating a hub crane assembly having an articulating arm in a further rotated position such that the second hoist extends partially outside of the hub according to the present disclosure;
FIG. 9 illustrates a partial, perspective view of one embodiment of hub of a wind turbine, particularly illustrating a hub crane assembly having an articulating arm in a maximum distance position with the second hoist extending completely outside of the hub according to the present disclosure;
FIG. 10 illustrates a partial, perspective view of one embodiment of hub of a wind turbine, particularly illustrating a hub crane assembly having an articulating arm in a maximum distance position with a load attached thereto according to the present disclosure;
FIG. 11 illustrates a partial, perspective view of one embodiment of hub of a wind turbine, particularly illustrating a hub crane assembly having an articulating arm in a minimum distance position with a load attached thereto according to the present disclosure; and
FIG. 12 illustrates a flow diagram of one embodiment of a method for lifting or lowering a wind turbine component between a support surface and a hub of a wind turbine according to the present disclosure.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims and their equivalents.

Generally, the present disclosure is directed to a hub crane assembly for a wind turbine. The hub crane assembly includes an adjustable articulating arm, first and second hoists, and a support component secured to the first hoist and a first attachment point of the articulating arm. As such, the first hoist is configured to rotate the articulating arm about the hinge point via the support component such that, as the articulating arm rotates, a clearance distance between the wind turbine and the articulating arm changes. Thus, the second hoist is configured with a load that is lifted and/or lowered from a support surface to the hub. Accordingly, the clearance distance is at a maximum as the load is lifted and is decreased when the load reaches the hub such than an operator can easily bring the load within the hub when it reaches the appropriate height.

The present disclosure provides many advantages not present in the prior art. For example, the hub crane assembly can change the working radius (i.e. the clearance distance) such that it is possible to move the components forward and backwards during lifting and/or lowering thereof. As such, the distance can be increased when desired (i.e. to maintain distance from the tower during lifting/lowering) or decreased as needed (i.e. when the components need to be brought within the hub). As such, large cranes can be eliminated during certain lifting and/or lowering procedures. In addition, the hub crane assembly can be easily installed from within the hub, thereby eliminating dangerous installation procedures atop the wind turbine tower for operators.

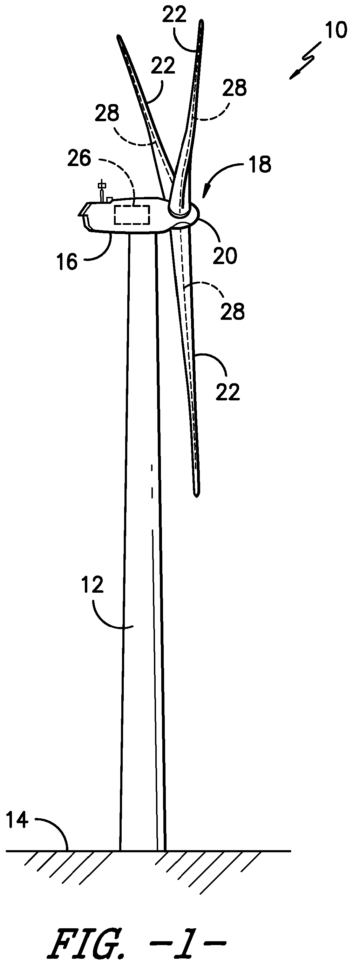

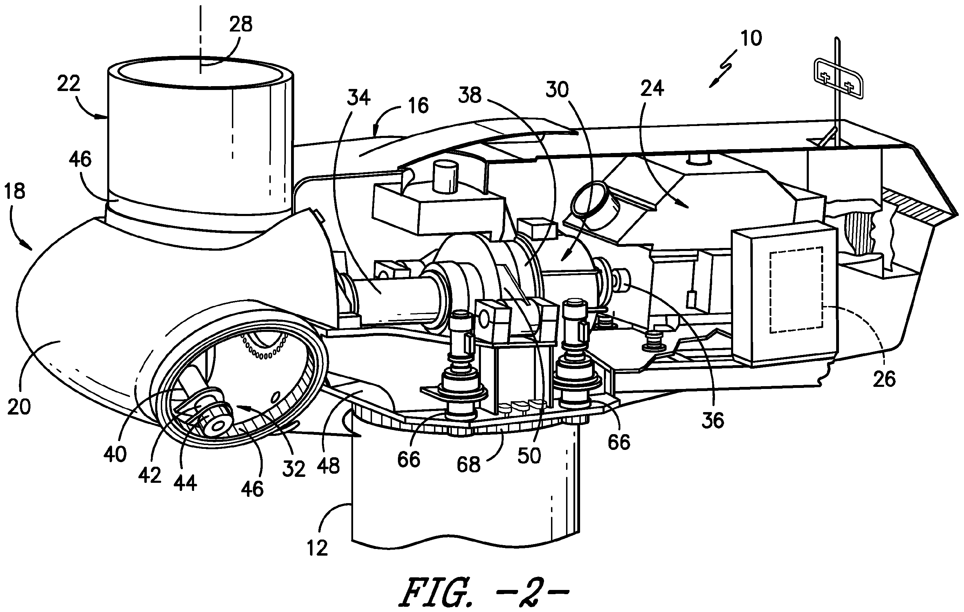

Referring now to the drawings, FIG. 1 illustrates a perspective view of one embodiment of a wind turbine 10 according to the present disclosure. As shown, the wind turbine 10 generally includes a tower 12 extending from a support surface 14, a nacelle 16 mounted on the tower 12, and a rotor 18 coupled to the nacelle 16. The rotor 18 includes a rotatable hub 20 and at least one rotor blade 22 coupled to and extending outwardly from the hub 20. For example, in the illustrated embodiment, the rotor 18 includes three rotor blades 22. However, in an alternative embodiment, the rotor 18 may include more or less than three rotor blades 22. Each rotor blade 22 may be spaced about the hub 20 to facilitate rotating the rotor 18 to enable kinetic energy to be transferred from the wind into usable mechanical energy, and subsequently, electrical energy. For instance, the hub 20 may be rotatably coupled to an electric generator 24 (FIG. 2) positioned within the nacelle 16 to permit electrical energy to be produced.

The wind turbine 10 may also include a wind turbine controller 26 centralized within the nacelle 16. However, in other embodiments, the controller 26 may be located within any other component of the wind turbine 10 or at a location outside the wind turbine 10. Further, the controller 26 may be communicatively coupled to any number of the components of the wind turbine 10 in order to control the components. As such, the controller 26 may include a computer or other suitable processing unit. Thus, in several embodiments, the controller 26 may include suitable computer-readable instructions that, when implemented, configure the controller 26 to perform various different functions, such as receiving, transmitting and/or executing wind turbine control signals.

Referring now to FIG. 2, a simplified, internal view of one embodiment of the nacelle 16 of the wind turbine 10 shown in FIG. 1 is illustrated. As shown, the generator 24 may be coupled to the rotor 18 for producing electrical power from the rotational energy generated by the rotor 18. For example, as shown in the illustrated embodiment, the rotor 18 may include a rotor shaft 34 coupled to the hub 20 for rotation therewith. The rotor shaft 34 may, in turn, be rotatably coupled to a generator shaft 36 of the generator 24 through a gearbox 38. Further, the gearbox 38 is connected to a bedplate support frame 48 by one or more torque supports 50. As is generally understood, the rotor shaft 34 provides a low speed, high torque input to the gearbox 38 in response to rotation of the rotor blades 22 and the hub 20. The gearbox 38 then converts the low speed, high torque input to a high speed, low torque output to drive the generator shaft 36 and, thus, the generator 24.

Each rotor blade 22 may also include a pitch adjustment mechanism 32 configured to rotate each rotor blade 22 about its pitch axis 28, depending on the wind speed and/or wind direction. As such, pitching the blades 22 directly affects the power output of the generator 24. More specifically, each pitch adjustment mechanism 32 may include a pitch drive motor 40 (e.g., any suitable electric, hydraulic, or pneumatic motor), a pitch drive gearbox 42, and a pitch drive pinion 44. In such embodiments, the pitch drive motor 40 may be coupled to the pitch drive gearbox 42 so that the pitch drive motor 40 imparts mechanical force to the pitch drive gearbox 42. Similarly, the pitch drive gearbox 42 may be coupled to the pitch drive pinion 44 for rotation therewith. The pitch drive pinion 44 may, in turn, be in rotational engagement with a pitch bearing 46 coupled between the hub 20 and a corresponding rotor blade 22 such that rotation of the pitch drive pinion 44 causes rotation of the pitch bearing 46. Thus, in such embodiments, rotation of the pitch drive motor 40 drives the pitch drive gearbox 42 and the pitch drive pinion 44, thereby rotating the pitch bearing 46 and the rotor blade 22 about the pitch axis 28. Similarly, the wind turbine 10 may include one or more yaw drive mechanisms 66 communicatively coupled to the controller 26, with each yaw drive mechanism(s) 66 being configured to change the angle of the nacelle 16 relative to the wind (e.g., by engaging a yaw bearing 68 of the wind turbine 10).

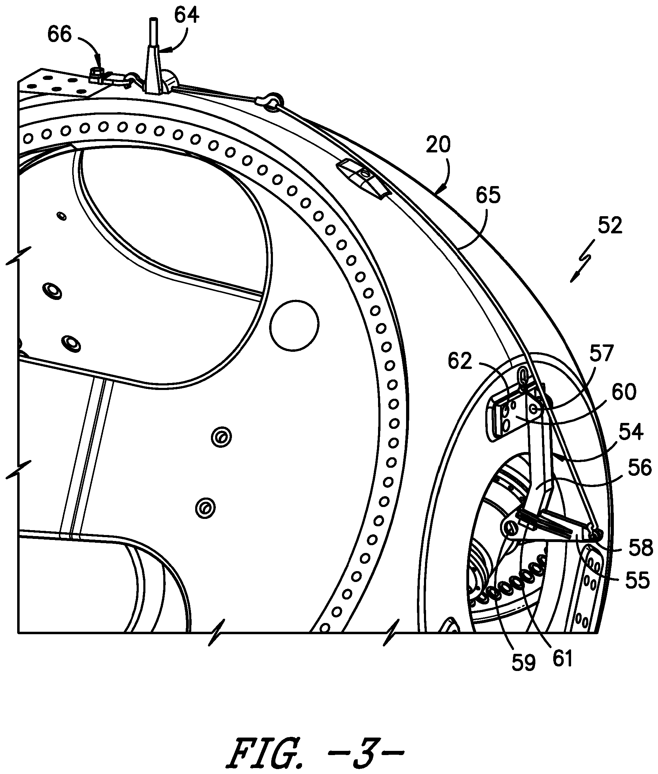

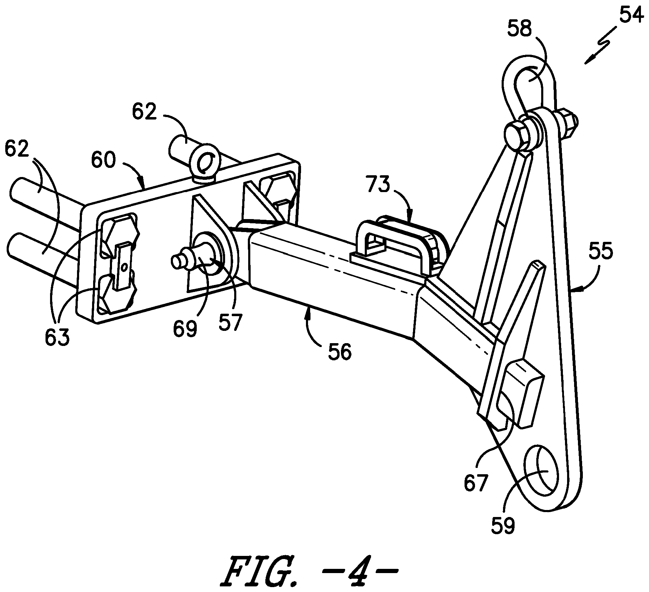

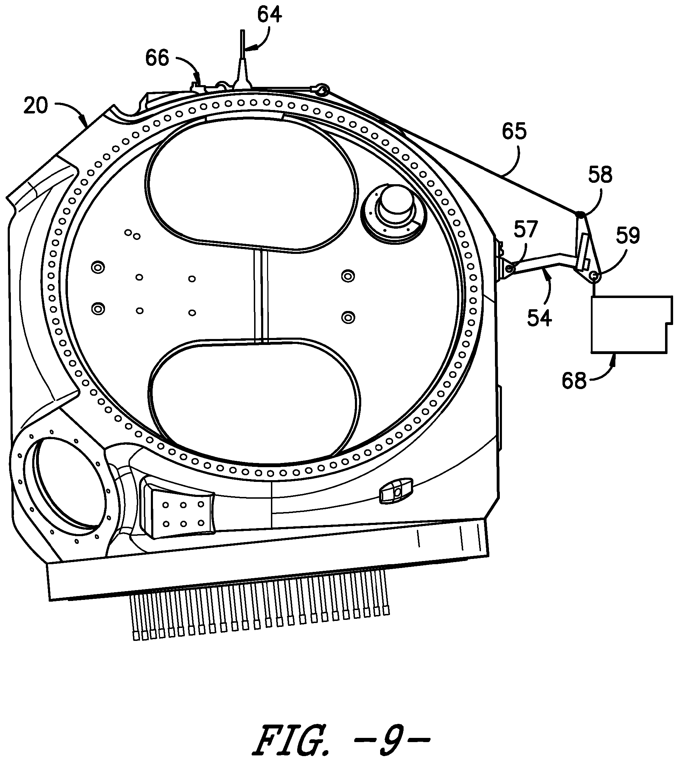

Referring now to FIGS. 3-11, various views of one embodiment of a hub crane assembly 52 mounted to a wind turbine 10 according to the present disclosure is illustrated. As shown, the hub crane assembly 52 includes an adjustable articulating arm 54, a first hoist 64, a support component 65, and an optional anchoring point 66. As shown particularly in FIGS. 3 and 5-11, the articulating arm 54 is mounted on the hub 20 of the wind turbine 10 via a hinge point 57. In addition, as shown in FIG. 4, the articulating arm 54 may include a first arm portion 55 and a second arm portion 56. More specifically, as shown, the first and second arm portions 55, 56 may be secured together at a fixed attachment location 61. For example, as shown in FIG. 4, the fixed attachment location 61 may include the second arm portion 56 of the articulating arm 54 being secured within a slot 67 defined in the first arm portion 55. As such, an end of the second arm portion 56 may fit within the slot 67 of the first arm portion 55 and secured therein, e.g. via mechanical fasteners, adhesives, welding, or similar. In alterative embodiments, the first and second arm portions 55, 56 may be secured together without the use of the slot 67. In addition, as shown particularly in FIG. 4, the articulating arm 54 may also include a handle 73 (e.g. mounted to the second arm portion 56) such that an operator can easily lift and move the articulating arm 54.

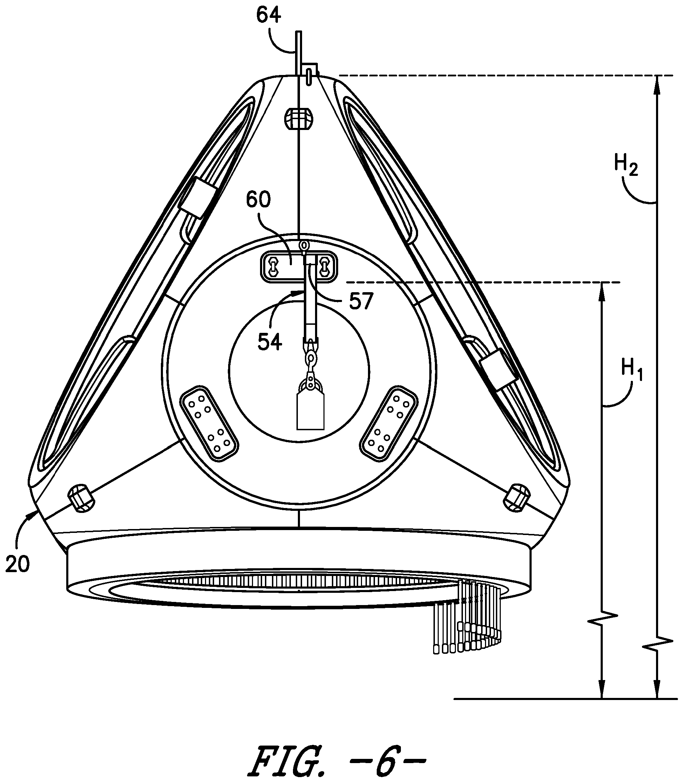

Referring particularly to FIG. 6, the articulating arm 54 may be mounted on the hub 20 of the wind turbine 10 at a first height H₁, whereas the first hoist 64 is mounted at a second height H₂ of the wind turbine 10. Further, as shown in the illustrated embodiment, the second height H₂ is greater than the first height H₁. In addition, as shown generally in FIGS. 3 and 4-11, the articulating arm 54 may be mountable to a front location of the hub 20, whereas the first hoist 64 may be mountable to a top location of at least one of the hub 20 or the nacelle 16 of the wind turbine 10. As such, the articulating arm 54 may be easily mounted to the front location from within the hub 20 such that an operator is not required to leave the hub 20.

In further embodiments, as shown in FIGS. 3 and 4, the adjustable articulating arm 54 may be mounted to the hub 20 via a mounting plate 60. More specifically, as shown, the second arm portion 56 of the articulating arm 54 may be mounted to the hub 20 via the mounting plate 60 at the hinge point 57. For example, the mounting plate 60 may include a plurality of bolt holes and corresponding bolts 62 that can be secured via a plurality of nuts (not shown) from inside the hub 20. In addition, as shown, the mounting plate 60 may include the hinge point 57. Thus, as shown in FIG. 4, the second arm portion 56 of the articulating arm 54 may be secured to the mounting plate 60 at the hinge point 57 via a pin 69.

Referring particularly to FIGS. 3 and 7-11, the support component 65 is secured to the first hoist 64 and a first attachment point 58 of the articulating arm 54. More specifically, as shown, the support component 65 may include a strap, a sling, or similar. In additional embodiments, the anchoring point 66 is configured to secure the first hoist 64 to the hub 20 of the wind turbine 10. More particularly, in certain embodiments, the anchoring point 66 may include a swivel bolt or any other suitable fastener so as to further secure the first hoist 64 to the hub 20.

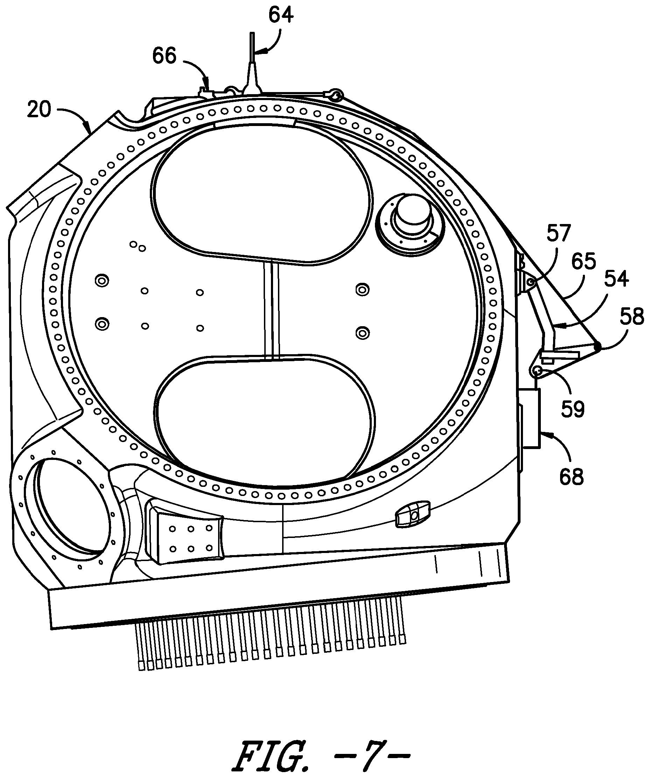

Referring now to FIGS. 7-11, the hub crane assembly 52 may also include a second hoist 68 secured to the articulating arm 54 at an opposing, second attachment point 59 of the first arm portion 55. In such embodiments, the second hoist 68 is configured to lift or lower a load 70 from a support surface (e.g. support surface 14) to the hub 20. It should be understood that the first and second hoists 55, 56 described herein may include any suitable hoist apparatus now known or later developed that is capable of hoisting (i.e. lifting or lowering) a load. As such, the present disclosure is not limited to any particular hoist configuration. In addition, the first and second hoists 55, 56 may be controller manually, e.g. via an operator, or automatically, e.g. via a controller.

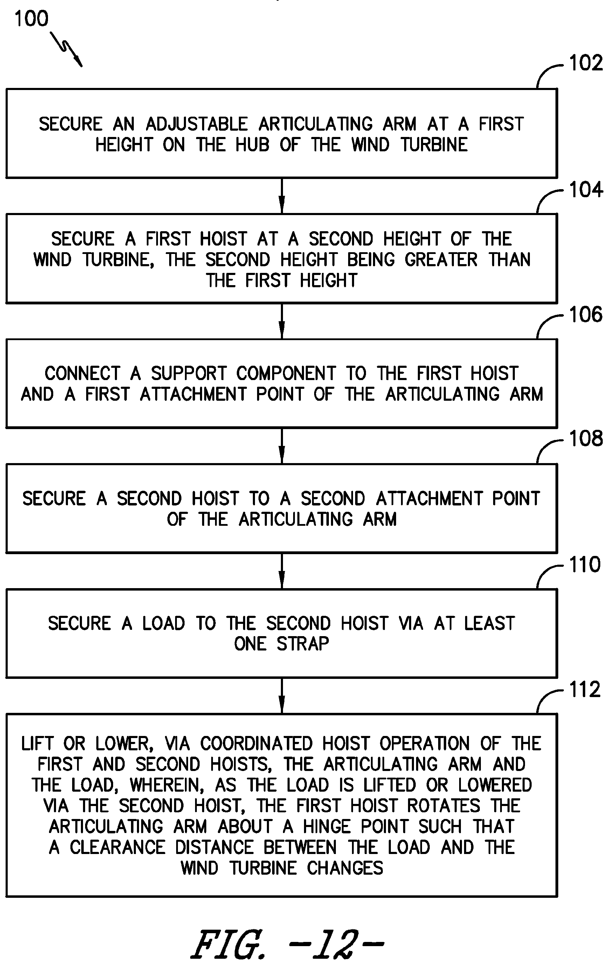

Thus, as shown generally in FIGS. 3-12, the first hoist 64 is configured to rotate the articulating arm 54 about the hinge point 57 via the support component 65 such that, as the articulating arm 54 rotates, a clearance distance (e.g. as illustrated by distances 72 and 74) between the wind turbine 10 and the articulating arm 54 (and also the load 70) changes. More specifically, as shown in FIG. 12, a flow diagram of one embodiment of a method 100 for lifting or lowering a wind turbine component between a support surface (e.g. support surface 14) and a hub 20 of a wind turbine 10 using the hub crane assembly 52 of the present disclosure is illustrated.

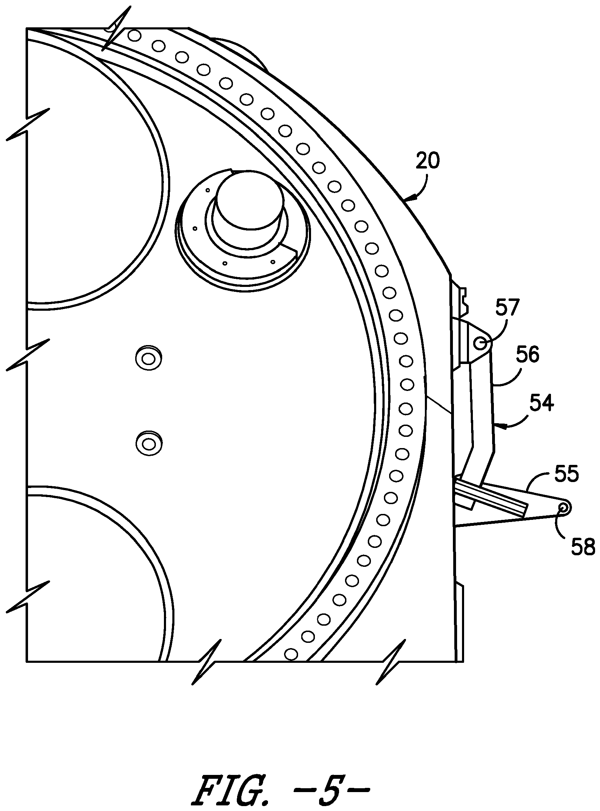

As shown at 102, the method 100 includes securing the adjustable articulating arm 54 at the first height H₁ on the hub 20 of the wind turbine 10. More specifically, as shown in FIGS. 5 and 6, the articulating arm 54 may be installed in a first position closest to the hub 20. This position allows an operator to easily install the mounting plate 60 as described above and secure the articulating arm 54 thereto without having to leave the inside of the hub 20.

As shown at 104, the method 100 includes securing a first hoist 64 at a second height H₂ of the wind turbine 10, wherein the second height H₂ is greater than the first height H₁. For example, as shown in FIG. 7, the first hoist 64 can also be installed from inside the hub 20 to a location atop the hub 20.

As shown at 106, the method 100 includes connecting a support component 65 to the first hoist 64 and a first attachment point 58 of the articulating arm 54. For example, the support component 65 may be routed from the first hoist 64 mounted atop the hub 20 to the articulating arm 54 and secured to the first attachment point 58. As shown at 108, the method 100 includes securing a second hoist 68 to a second attachment point 59 of the articulating arm 54. In addition, as shown, an operator may also secure the second hoist 68 to the second attachment point 59 from inside of the hub 20.

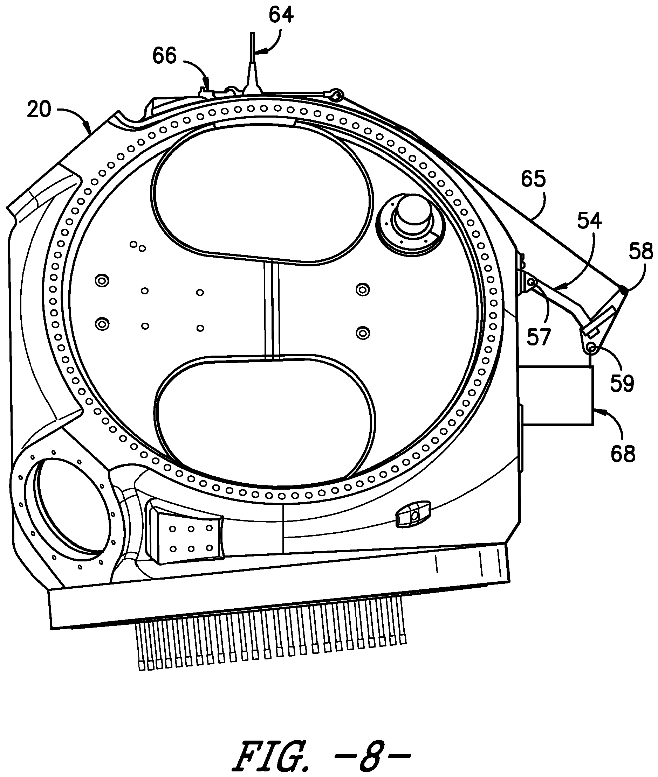

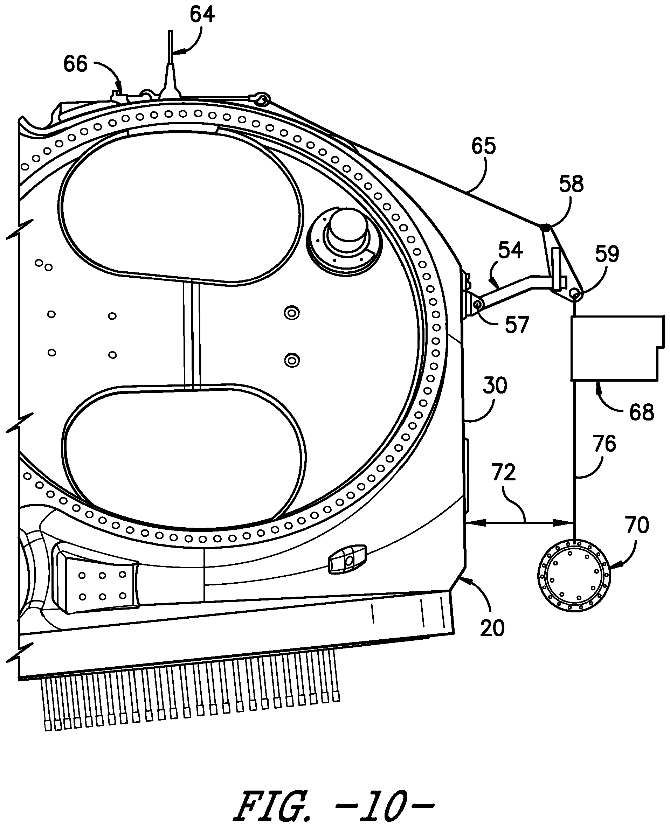

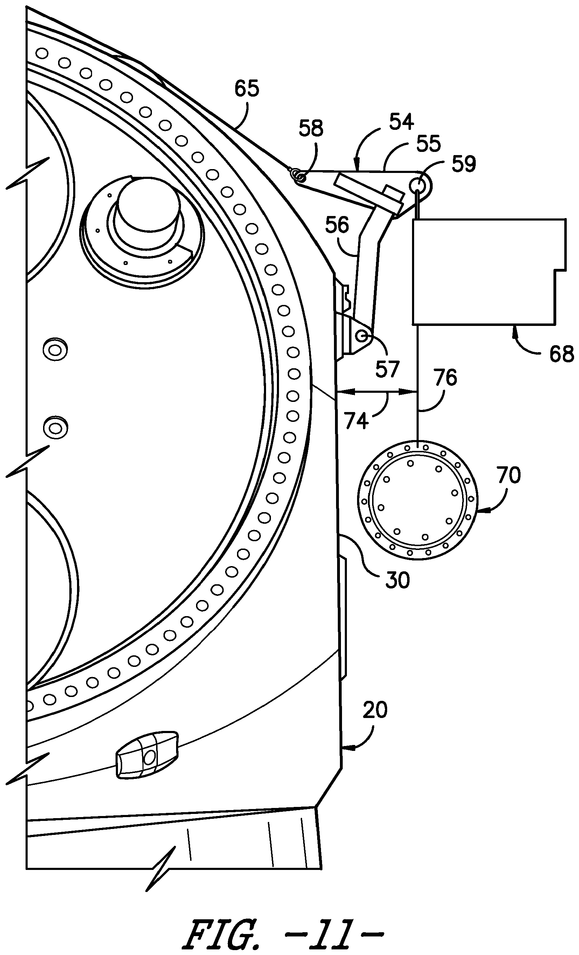

Referring still to FIG. 12, as shown at 110, the method 100 includes securing a load 70 to the second hoist 65 via at least one support line 76 (FIGS 10 and 11). Thus, as shown at 112, the method 100 includes lifting or lowering, via coordinated hoist operation of the first and second hoists 64, 68, the articulating arm 54 and the load 70. Accordingly, as the load 70 is lifted or lowered via the second hoist 68, the first hoist 64 rotates the articulating arm 54 about the hinge point 57 such that the clearance distance 72, 74 between the load 70 and the wind turbine 10 (e.g. the tower 12) changes. More specifically, as shown, as the first hoist 64 rotates the articulating arm 54 upwards, the second hoist 68 is suspended outside of the hub 20 and the articulating arm 54 extends outward from the hub 20 at its maximum length. (See e.g., FIGS. 8-10; distance 72). Thus, as the load is lifted and/or lowered, the clearance distance 72 is maximized via the adjustable articulating arm 54 so as to prevent collisions between the load 70 and the tower 12 of the wind turbine 10.

In addition, as shown in FIGS. 10 and 11, the articulating arm 54 continues to rotate upwards towards the first hoist 54 until the load 70 has reached an opening 30 of the hub 20. At this time, an operator can easily retrieve the load 70 from the support line 76 and bring the load within the hub 20. It should be understood that the load 70 described herein may include any suitable wind turbine components, such as, for example, the pitch drive mechanism 32 and/or any other components.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art.

| **Reference Character** | **Component** |
|---|---|
| 10 | Wind Turbine |
| 12 | Tower |
| 14 | Support Surface |
| 16 | Nacelle |
| 18 | Rotor |
| 20 | Hub |
| 22 | Rotor Blades |
| 24 | Generator |
| 26 | Controller |
| 28 | Pitch Axis |
| 30 | Opening |
| 32 | Pitch Drive Mechanism |
| 34 | Rotor Shaft |
| 36 | Generator Shaft |
| 38 | Gearbox |
| 40 | Pitch Drive Motor |
| 42 | Pitch Drive Gearbox |
| 44 | Pitch Drive Pinion |
| 46 | Pitch Bearing |
| 48 | Bedplate Support Frame |
| 50 | Torque Supports |
| 52 | Hub Crane Assembly |
| 54 | Articulating Arm |
| 55 | First Arm Portion |
| 56 | Second Arm Portion |
| 57 | Hinge Point |
| 58 | First Attachment Point |
| 59 | Second Attachment Point |
| 60 | Mounting Plate |
| 61 | Fixed Attachment Location |
| 62 | Bolts |
| 63 | Bolt Holes |
| 64 | First Hoist |
| 65 | Support Component |
| 66 | Anchoring Point |
| 67 | Slot |
| 69 | Pin |
| 68 | Second Hoist |
| 69 | Pin |
| 70 | Load |
| 73 | Handle |
| 72 | First Distance |
| 74 | Second Distance |
| 76 | Support Line |
| 100 | Method |
| 102 | Method Step |
| 104 | Method Step |
| 106 | Method Step |
| 108 | Method Step |
| 110 | Method Step |
| 112 | Method Step |

## Claims

1. A hub crane assembly (52) for a wind turbine (10), comprising:
an adjustable articulating arm (54) mountable at a first height on a hub (20) of the wind turbine (10) at a hinge point (57);
a first hoist (64) mountable at a second height of the wind turbine (10), the second height being greater than the first height; and,
a support component (65) secured to the first hoist (64) and a first attachment point of the articulating arm (54),
wherein the first hoist (64) is configured to rotate the articulating arm (54) about the hinge point (57) via the support component (65) such that, as the articulating arm (54) rotates, a clearance distance between the wind turbine (10) and the articulating arm (54) changes.

2. The hub crane assembly (52) of claim 1, further comprising a second hoist (68) secured to the articulating arm (54) at an opposing, second attachment point (59), the second hoist (68) configured to lift or lower a load (70) from a support surface (14) to the hub (20).

3. The hub crane assembly (52) of claims 1 or 2, wherein the articulating arm (54) comprises a first arm portion (55) and a second arm portion (56), the first and second arm portions (55, 56) secured together at a fixed attachment location (61).

4. The hub crane assembly (52) of claim 3, wherein the fixed attachment location (61) comprises the second arm portion (56) of the articulating arm (54) secured within a slot (67) defined in the first arm portion (55).

5. The hub crane assembly (52) of claim 3, wherein the second arm portion (56) of the articulating arm (54) is mounted to the hub (20) via a mounting plate (60) at the hinge point (57).

6. The hub crane assembly (52) of any of the preceding claims, further comprising an anchoring point (66) configured to secure the first hoist (64) to the hub (20) of the wind turbine (10).

7. The hub crane assembly (52) of claim 6, wherein the anchoring point (66) comprising a swivel bolt.

8. The hub crane assembly (52) of any of the preceding claims, wherein the articulating arm (54) is mountable to a front location of the hub (20).

9. The hub crane assembly (52) of any of the preceding claims, wherein the first hoist (64) is mountable to a top location of at least one of the hub (20) or a nacelle (16) of the wind turbine (10).

10. The hub crane assembly (52) of any of the preceding claims, wherein the support component (65) comprises at least one of a strap or a sling.

11. A method (100) for lifting or lowering a wind turbine (10) component between a support surface (14) and a hub (20) of a wind turbine (10) using a hub cranes assembly according to any of claims 1 - 10, the method (100) comprising:
securing an adjustable articulating arm (54) at a first height on the hub (20) of the wind turbine (10);
securing a first hoist (64) at a second height of the wind turbine (10), the second height being greater than the first height;
connecting a support component (65) to the first hoist (64) and a first attachment point (58) of the articulating arm (54);
securing a second hoist (68) to a second attachment point (59) of the articulating arm (54);
securing a load (70) to the second hoist (68) via at least one strap; and,
lifting or lowering, via coordinated hoist operation of the first (64) and second (68) hoists, the articulating arm (54) and the load (70),
wherein, as the load (70) is lifted or lowered via the second hoist (68), the first hoist (64) rotates the articulating arm (54) about a hinge point (57) such that a clearance distance between the load (70) and the wind turbine (10) changes.

12. The method (100) of claim 11, further comprising securing the adjustable articulating arm (54) at the first height on the hub via a mounting plate (60) from within the hub (20).

13. A wind turbine (10), comprising:
a tower (12) mounted to a support surface (14);
a nacelle (16) mounted atop the tower (12);
a rotor (18) mounted to the nacelle (16), the rotor (18) comprising a rotatable hub (20) having one or more rotor blades (22) mounted thereto; and,
a hub crane assembly (52) according to claim 1.

14. The wind turbine (10) of claim 13, further comprising a second hoist (68) secured to the articulating arm (54) at an opposing, second attachment point (59), the second hoist (68) configured to lift or lower a load (70) from a support surface (14) to the hub (20).

15. The wind turbine (10) of claims 13 or 14, wherein the articulating arm (54) comprises a first arm portion (55) and a second arm portion (56), the first and second arm portions (55, 56) secured together at a fixed attachment location (61), wherein the second arm portion (56) of the articulating arm (54) is mounted to the hub via a mounting plate (60) at the hinge point (57).

## Patentansprüche

1. Nabenkrananordnung (52) für eine Windturbine (10), umfassend:
einen einstellbaren Gelenkarm (54), der in einer ersten Höhe an einer Nabe (20) der Windturbine (10) an einem Scharnierpunkt (57) montierbar ist;
ein erstes Hebezeug (64), das in einer zweiten Höhe der Windturbine (10) montierbar ist,
wobei die zweite Höhe größer als die erste Höhe ist; und
eine Stützkomponente (65), die an dem ersten Hebezeug (64) und einem ersten Befestigungspunkt des Gelenkarms (54) befestigt ist,
wobei das erste Hebezeug (64) konfiguriert ist, um den Gelenkarm (54) mittels der Stützkomponente (65) um den Scharnierpunkt (57) zu drehen, so dass sich, wenn sich der Gelenkarm (54) dreht, ein Sicherheitsabstand zwischen der Windturbine (10) und dem Gelenkarm (54) ändert.

2. Nabenkrananordnung (52) nach Anspruch 1, ferner umfassend ein zweites Hebezeug (68), das an dem Gelenkarm (54) an einem gegenüberliegenden zweiten Befestigungspunkt (59) gesichert ist, wobei das zweite Hebezeug (68) konfiguriert ist, um eine Last (70) von einer Stützfläche (14) anzuheben oder auf die Nabe (20) abzusenken.

3. Nabenkrananordnung (52) nach Anspruch 1 oder 2, wobei der Gelenkarm (54) einen ersten Armabschnitt (55) und einen zweiten Armabschnitt (56) umfasst, wobei der erste und der zweite Armabschnitt (55, 56) zusammen an einer festen Befestigungsstelle (61) gesichert sind.

4. Nabenkrananordnung (52) nach Anspruch 3, wobei die feste Befestigungsstelle (61) den zweiten Armabschnitt (56) des Gelenkarms (54) umfasst, der in einem Schlitz (67) gesichert ist, der in dem ersten Armabschnitt (55) definiert ist.

5. Nabenkrananordnung (52) nach Anspruch 3, wobei der zweite Armabschnitt (56) des Gelenkarms (54) mittels einer Montageplatte (60) an dem Scharnierpunkt (57) an der Nabe (20) montiert ist.

6. Nabenkrananordnung (52) nach einem der vorhergehenden Ansprüche, ferner umfassend einen Verankerungspunkt (66), der konfiguriert ist, um das erste Hebezeug (64) an der Nabe (20) der Windturbine (10) zu sichern.

7. Nabenkrananordnung (52) nach Anspruch 6, wobei der Verankerungspunkt (66) einen Schwenkbolzen umfasst.

8. Nabenkrananordnung (52) nach einem der vorhergehenden Ansprüche, wobei der Gelenkarm (54) an einer vorderen Stelle der Nabe (20) montierbar ist.

9. Nabenkrananordnung (52) nach einem der vorhergehenden Ansprüche, wobei das erste Hebezeug (64) an einer oberen Stelle von mindestens einer der Naben (20) oder einer Gondel (16) der Windturbine (10) montierbar ist.

10. Nabenkrananordnung (52) nach einem der vorhergehenden Ansprüche, wobei die Stützkomponente (65) mindestens einen Gurt oder eine Schlinge umfasst.

11. Verfahren (100) zum Anheben oder Absenken einer Windturbinen- (10) komponente zwischen einer Stützfläche (14) und einer Nabe (20) einer Windturbine (10) unter Verwendung einer Nabenkrananordnung gemäß einem der Ansprüche 1-10, wobei das Verfahren (100) umfasst:
Sichern eines einstellbaren Gelenkarms (54) in einer ersten Höhe an der Nabe (20) der Windturbine (10);
Sichern eines ersten Hebezeugs (64) in einer zweiten Höhe der Windturbine (10), wobei die zweite Höhe größer als die erste Höhe ist;
Verbinden einer Stützkomponente (65) mit dem ersten Hebezeug (64) und einem ersten Befestigungspunkt (58) des Gelenkarms (54);
Sichern eines zweiten Hebezeugs (68) an einem zweiten Befestigungspunkt (59) des Gelenkarms (54);
Sichern einer Last (70) an dem zweiten Hebezeug (68) mittels mindestens einem Gurt; und
Anheben oder Absenken des ersten und zweiten Hebezeugs (68), des Gelenkarms (54) und der Last (70) mittels eines koordinierten Hebezeugbetriebs;
wobei, wenn die Last (70) mittels des zweiten Hebezeugs (68) angehoben oder abgesenkt wird, das erste Hebezeug (64) den Gelenkarm (54) um einen Scharnierpunkt (57) dreht, so dass sich ein Sicherheitsabstand zwischen der Last (70) und der Windturbine (10) ändert.

12. Verfahren (100) nach Anspruch 11, ferner umfassend das Sichern des einstellbaren Gelenkarms (54) in der ersten Höhe an der Nabe mittels einer Montageplatte (60) von innerhalb der Nabe (20) aus.

13. Windturbine (10), umfassend:
einen Turm (12), der an einer Stützfläche (14) montiert ist;
eine Gondel (16), die auf dem Turm (12) montiert ist;
einen an der Gondel (16) montierten Rotor (18), wobei der Rotor (18) eine drehbare Nabe (20) mit einem oder mehreren daran montierten Rotorblättern (22) umfasst; und
eine Nabenkrananordnung (52) nach Anspruch 1.

14. Windturbine (10) nach Anspruch 13, ferner umfassend ein zweites Hebezeug (68), das an dem Gelenkarm (54) an einem gegenüberliegenden zweiten Befestigungspunkt (59) gesichert ist, wobei das zweite Hebezeug (68) konfiguriert ist, um eine Last (70) von einer Stützfläche (14) anzuheben oder auf die Nabe (20) abzusenken.

15. Windturbine (10) nach Anspruch 13 oder 14, wobei der Gelenkarm (54) einen ersten Armabschnitt (55) und einen zweiten Armabschnitt (56) umfasst, wobei der erste und der zweite Armabschnitt (55, 56) zusammen an einer festen Befestigungsstelle (61) gesichert sind, wobei der zweite Armabschnitt (56) des Gelenkarms (54) mittels einer Montageplatte (60) an dem Scharnierpunkt (57) an der Nabe montiert ist.

## Revendications

1. Ensemble grue (52) pour moyeu d'une éolienne (10), comprenant :
un bras articulé réglable (54), montable à une première hauteur sur le moyeu de l'éolienne (10) en un point d'articulation (57) ;
un premier palan (64) montable à une seconde hauteur de l'éolienne (10), la seconde hauteur étant supérieure à la première hauteur ; et
un élément de soutien (65), fixé au premier palan (64) et en un premier point de fixation du bras articulé (54),
dans lequel le premier palan (64) est conçu pour faire tourner le bras d'articulation (54) autour du point d'articulation (57) par le biais du élément de soutien (65) de sorte que, lorsque le bras d'articulation (54) tourne, la distance de dégagement varie entre l'éolienne (10) et le bras articulé (54).

2. Ensemble grue (52) pour moyeu selon la revendication 1, comprenant en outre un second palan (68) fixé au bras d'articulation (54) en un second point de fixation opposé (59), le second palan (68) étant conçu pour lever ou pour abaisser une charge (70) d'une surface de soutien (14) au moyeu (20).

3. Ensemble grue (52) pour moyeu selon la revendication 1 ou 2, dans lequel le bras d'articulation (54) comprend une première partie de bras (55) et une seconde partie de bras (56), les première et seconde parties de bras (55, 56) étant fixées ensemble à un emplacement fixe de fixation (61).

4. Ensemble grue (52) pour moyeu selon la revendication 3, dans lequel la seconde partie de bras (56) du bras articulé (54) de l'emplacement fixe de fixation (61) est fixée dans une fente (67) définie dans la première partie de bras (55).

5. Ensemble grue (52) pour moyeu selon la revendication 3, dans lequel la seconde partie de bras (56) du bras articulé (54) est montée sur le moyeu (20) par le biais d'une plaque de montage (60) au niveau du point d'articulation (57).

6. Ensemble grue (52) pour moyeu selon l'une quelconque des revendications précédentes, comprenant en outre un point d'ancrage (66) conçu pour fixer le premier palan (64) à le moyeu (20) de l'éolienne (10).

7. Ensemble grue (52) pour moyeu selon la revendication 6, dans lequel le point d'ancrage (66) comprend un boulon pivotant.

8. Ensemble grue (52) pour moyeu selon l'une quelconque des revendications précédentes, dans lequel le bras d'articulation (54) est montable sur un emplacement avant du moyeu (20).

9. Ensemble grue (52) pour moyeu selon l'une quelconque des revendications précédentes, dans lequel le premier palan (64) peut être monté à un emplacement supérieur du moyeu (20) et/ou d'une nacelle (16) de l'éolienne (10).

10. Ensemble grue (52) pour moyeu selon l'une quelconque des revendications précédentes, dans lequel l'élément de soutien (65) comprend une sangle et/ou une élingue.

11. Procédé (100) d'élévation ou d'abaissement d'un élément d'éolienne (10) entre une surface de soutien (14) et un moyeu (20) d'une éolienne (10), utilisant un ensemble grue pour moyeu selon l'une quelconque des revendications 1 à 10, le procédé (100) comprenant :
la fixation d'un bras articulé réglable (54) à une première hauteur sur le moyeu (20) de l'éolienne (10) ;
la fixation d'un premier palan (64) à une seconde hauteur de l'éolienne (10), la seconde hauteur étant supérieure à la première hauteur ;
la liaison d'un élément de soutien (65) au premier palan (64) et à un premier point de fixation (58) du bras articulé (54) ;
la fixation d'un second palan (68) à un second point de fixation (59) du bras articulé (54) ;
la fixation d'une charge (70) au second palan (68) par le biais d'au moins une sangle ; et
le levage ou l'abaissement, par le biais d'une opération de levage coordonnée des premier et second palans (68), du bras articulé (54) et de la charge (70),
et lorsque la charge (70) est soulevée ou abaissée par le second palan (68), le premier palan (64) fait tourner le bras articulé (54) autour d'un point d'articulation (57) de sorte qu'une distance de dégagement varie entre la charge (70) et l'éolienne (10).

12. Procédé (100) selon la revendication 11, comprenant en outre la fixation du bras articulé réglable (54) à la première hauteur sur le moyeu par le biais d'une plaque de montage (60) à partir de l'intérieur du moyeu (20).

13. Éolienne (10), comprenant :
une tour (12) montée sur une surface de soutien (14) ;
une nacelle (16) montée au sommet de la tour (12) ;
un rotor (18) monté sur la nacelle (16), le rotor (18) comprenant un moyeu (20) sur lequel sont montées une ou plusieurs pales de rotor (22) ; et
un ensemble grue pour moyeu (52) selon la revendication 1.

14. Éolienne (10) selon la revendication 13, comprenant en outre un second palan (68) fixé au bras articulé (54) en un second point de fixation opposé (59), le second palan (68) étant conçu pour lever ou pour abaisser une charge (70) d'une surface de soutien (14) au moyeu (20).

15. Éolienne (10) selon la revendication 13 ou 14, dans laquelle le bras articulé (54) comprend une première partie de bras (55) et une seconde partie de bras (56), les première et seconde parties de bras (55, 56) étant fixées ensemble en un emplacement fixe de fixation (61), la seconde partie de bras (56) du bras articulé (54) étant montée sur le moyeu par le biais d'une plaque de montage (60) au niveau du point d'articulation (57).
